# EUROPEAN PATENT SPECIFICATION

(11) **EP 1 407 374 B1**
(45) Date of publication and mention of the grant of the patent: **20.04.2011**
(21) Application number: 02741893.8
(22) Date of filing: 06.06.2002
(51) Int. Cl.: G06F 15/16, H04L 29/08, H04L 12/28

(54) **TARGETED DELIVERY OF MEDIA-PROMOTED CONTENT TO SELECTED NETWORK SERVICE PROVIDERS IN A CONTENT DELIVERY NETWORK**
GEZIELTE ABLIEFERUNG VON INHALT MIT MEDIENWERBUNG AN AUSGEWÄHLTE NETZWERKDIENSTANBIETER IN EINEM INHALTSABLIEFERUNGSNETZWERK
DISTRIBUTION CIBLEE DE CONTENU MULTIMEDIA A DES FOURNISSEURS DE SERVICES RESEAU SELECTIONNES DANS UN RESEAU DE DISTRIBUTION DE CONTENU

(30) Priority: 06.06.2001 US 296417 P
(43) Date of publication of application: 14.04.2004
(73) Proprietor: Akamai Technologies, Inc., Cambridge, MA 02142 (US)
(72) Inventor: LEWIN, Daniel, M., deceased (US); AFERGAN, Michael, Moise, Cambridge, MA 02139 (US)
(74) Representative: Lawrence, Malcolm Graham
(86) International application number: PCT/US2002/018045
(87) International publication number: WO 2002/099679

(56) References cited:
- WO-A-00/04458
- WO-A-00/51010
- WO-A-00/67450
- US-A- 5 956 482
- US-A- 6 151 631
- US-B1- 6 438 217
- PUGH A M: "BLOWING AWAY WEB DELAYS" DATA COMMUNICATIONS, MCGRAW HILL. NEW YORK, US, vol. 28, no. 15, 21 October 1999 (1999-10-21), pages 30-34,36, XP000865033 ISSN: 0363-6399
- NOTTINGHAM M: "On defining a role for demand-driven surrogate origin servers" COMPUTER COMMUNICATIONS, ELSEVIER SCIENCE PUBLISHERS BV, AMSTERDAM, NL, vol. 24, no. 2, 1 February 2001 (2001-02-01), pages 215-221, XP004704599 ISSN: 0140-3664
- JOHNSON K L ET AL: "The measured performance of content distribution networks" COMPUTER COMMUNICATIONS, ELSEVIER SCIENCE PUBLISHERS BV, AMSTERDAM, NL, vol. 24, no. 2, 1 February 2001 (2001-02-01), pages 202-206, XP004704597 ISSN: 0140-3664
- LAZAR I ET AL: "EXPLORING CONTENT DELIVERY NETWORKING" IT PROFESSIONAL, IEEE SERVICE CENTER, LOS ALAMITOS, CA, US, 1 July 2001 (2001-07-01), pages 47-49, XP002950379 ISSN: 1520-9202

## Description

This application is based on and claims priority from Provisional Application Serial No. 60/296,417, filed June 6, 2001.

### BACKGROUND OF THE INVENTION

### Technical Field

The present invention relates generally to creating an effective platform for media distribution over the Internet.

### Description of the Related Art

In recent years, the Internet Protocol (IP) has become an increasingly pervasive standard. Most notably, it has facilitated the creation of the world's first ubiquitous global distribution platform, namely, the Web. IP will continue to provide expanded access to networked devices in the future-whether they are traditional computers, set-top boxes, game machines, phones, or PDAs. While IP will not replace traditional media- namely, print, broadcast, cable, and satellite-it may represent five to fifteen percent of the world's distribution traffic over the next three to five years.

While the desire to capitalize on this opportunity is great, recent experiences have shown that the Internet is a poor platform for media distribution. These hurdles are not a phenomenon of the recent economic boom and bust, nor are they problems that will be solved with iterations on the current approach. Instead, the economic and technical challenges of the Internet today are fundamental to the distribution model in which data is transferred across the Internet through dozens of networks (or more) and thousands of expensive electronic devices.

The explosive growth of Internet-related businesses over the past several years has obscured the inherent problems. Indeed, the belief was that a content provider with a simple computer and a phone line could "plug-in" to the Internet anywhere in the world and seamlessly distribute content to any user, anywhere in the world. Likewise, that end-user, located anywhere in the world would have equally simple access to the Internet and a world of content. This extremely simple view of the Internet has catapulted it to great success and ubiquity over the past several years.

Such a simplistic model fails to adequately describe that the Internet is inherently a complex and fragmented system made up of over 7,500 networks. As data travels from server to end-user it will not only cross multiple networks but also multiple types of networks. There are two primary types of networks. Access networks, which provide connectivity to businesses and consumer end-users, are what are generally thought of as the traditional Internet Service Provider (ISP), where end-users are most often connected. In contrast, transit networks provide connectivity primarily to other networks and are generally considered to be the Tier 1, or backbone, networks of the Internet, such as UUNet or major national PTTs. As a result of this architecture, there is no dominant network for connectivity. Even well-known network,s such as UUNet access service and AOL, each deliver no more than 6% or less traffic. Beyond this small handful of larger networks, traffic per ISP drops dramatically.

One important factor for a distribution network is the inherent cost of bandwidth. To provide connectivity across the Internet, networks must build out hardware to support the required capacity. Doing so is an extremely expensive proposition. Not only must transit providers pay to lay fiber in the ground, but they must then pay a considerable amount of money to support the fiber - with routers, equipment, amplifiers, and the like. As a result, each bit of information flowing across the Internet touches at least millions of dollars in hardware infrastructure. Traversing the Internet can require traveling through dozens of hops and handfuls of networks, each of which must eventually find a way to recoup the massive capital outlays required to build out such a network. It is true that in recent years there has been a drop in bandwidth prices, but as the Internet bubble disappears and network providers are forced to run profitable businesses, the Internet's infrastructure will enforce a lower bound on bandwidth prices.

Another byproduct of this architecture and cost structure that is observed today is that to effectively reach end-users, a content provider must have a multi-network strategy. While many networks have developed extensive fiber networks over the past several years, that, as mentioned above, is only part of the cost. To make the fiber operational requires purchasing millions of dollars in equipment and extensive fees to operate and maintain the system. Therefore, providers-even during the economic euphoria of the past several years-were forced to run their networks at or very close to capacity. Because this is true at each of the roughly 20 hops that will connect an origin server to an end-user, content distributed from a single origin, or even a small number of mirror sites, suffers from significant degradation and poor performance. Proof of this phenomenon can clearly be seen during times of peak usage and throughout the day as congestion causes loss and latency. It can also of course be seen by end-users, who are unfortunately accustomed to waiting for poor performing sites to load.

A further problem for media is that because the Internet is run at its effective capacity, the Internet cannot support the type of volume that a successful media platform would require. A simple example demonstrates this problem. Assuming a popular web site has a conversion rate of 5% and 20 minutes of use per user per visit, a modest rate audio program would require 24Gbps of transit capacity. Beyond the significant expense burden that such an offering would produce, the Internet could not support such an offering. Given the Internet today peaks at about 200Gbps of total long haul, or transit, capacity, requiring 180Gbps means that programming one channel with a modest audience, by network television standards, would have to reserve virtually the entire Internet - or pay to double its size - just to provide and deliver programming to viewers.

To be successful, a media platform requires a fixed or near-fixed distribution cost. Print, broadcast, cable, and satellite all work by allowing a media company to scale distribution, use, and number of users without significantly increasing costs. This not only keeps the costs of distribution low but also allows a media company to benefit from growth in its business.

This is not the case with Internet distribution today. As discussed, traversing the Internet has an associated cost that is a function of the amount of information transmitted. The model of "send-more, pay-more" is an inherent property of the Internet that cannot change in the current structure. This means that media distribution cannot be fully successful on the Internet because, even with a wildly successful offering, the profits on that offering are inherently limited - or not possible to achieve.

Beyond the fact that the cost of distribution is so high, another fundamental problem for media companies is that in the current model, the content distributor, namely, the media company, must bear this cost. In the early days of the Internet, this model was accepted as media companies were solely concerned with eyeballs. As a result, ISPs now view content-often very valuable and/or expensive-to-produce content-as free. They sign up end-users, focusing on providing last mile connectivity and customer service, and they then assume that access to the wealth of valuable content on the Internet will be free and unfettered. This is in stark contrast to the cable television model where the MSOs understand they must pay content providers to carry their programs. The cable model, too, was once plagued by the construct in which content providers were forced to provide content for free. In that arena, however, programmers such as HBO and MTV flipped the model and forced the MSOs to pay for the right to offer this popular content to their subscribers. In the past, media companies have also entered into agreements to provide content to specific broadcast or cable networks, including pay-per-view arrangements.

Due to the inherent business limitations, media companies are often tempted to provide distribution rights to portals. While this sometimes provide a short-term source of revenue, the longer this practice continues, the more media companies' position of power and contact with end-users is eroded. This leaves a media company in a tenuous position in the IP space-unable to retain control of viewer relationships, and unable to build an economically sound business model.

It would be highly desirable to create an effective platform for media distribution on the Internet. To date, media distribution on the Internet has not been successful, when viewed against a success metric that measures when a media company is able to make a profit off of a very large user base. To truly support medina companies, a successful Internet platform must have two fundamental properties. First, the platform must be massively scalable and completely reliable to - provide a high quality experience to a very large audience. Second, and more important, the platform must exhibit economies of scale - demonstrated by low or zero marginal costs - to enable a large customer base to generate profits. Unfortunately, the Internet does not offer either of these properties today.

Example prior art systems are disclosed in the following patents: WO 00/67450 A; WO 00/04458 A; WO 00/51010 A; US-A-5 956 482 and US-A-6 151 631 as well as the following articles:
- PUGH AM: "BLOWING AWAY WEB DELAYS" DATA COMMUNICATIONS, MCGRAW HILL. NEW YORK, US, VOL. 28, NO. 15, 21 October 1999 (1999-10-21), pages 30-34, 36, XP000865033 ISSN: 0363-6399
- NOTTINGHAM M: "On defining a role for demand-driven surrogate origin servers" COMPUTER COMMUNICATIONS, ELSEVIER SCIENCE PUBLISHERS BV, AMSTERDAM, NL, vol. 24, no. 2, 1 February 2001 (2001-02-01), pages 215-221, XP004704599 ISSN: 0140-3664
- JOHNSON KL ET AL: "The measured performance of content distribution networks" COMPUTER COMMUNICTIONS, ELSEVIER SCIENCE PUBLISHERS BV, AMSTERDAM, NL, vol. 24, no. 2, 1 February 2001 (2001-02-01) pages 202-206, XP004704597 ISSN:0140-3664

### Summary of Invention

In a first aspect of the present invention, there is provided a method for distributing given content as set out in claim 1.

Other preferable features are disclosed in the dependent claims.

### BRIEF DESCRICPTION OF THE DRAWINGS

For a more complete understanding of the present invention and the advantages thereof, reference should be made to the following Detailed Description taken in connection with the accompanying drawings, in which:
Figure 1. is a diagram of a known content delivery network in which the present invention may be implemented;
Figure 2 is a simplified diagram of certain other control mechanisms used in the content delivery network of Figure 1; and
Figure 3 is a simplified diagram of a media distribution platform and business method according to the present invention.

### DESCRIPTTON OF THE EMBODIMENT

It is known in the art to delivery HTTP, streaming media and applications over an Internet content delivery network (CDN or ICDN). The present invention may leverage Internet CDN architecture and functionality that, by way of background, is now described.

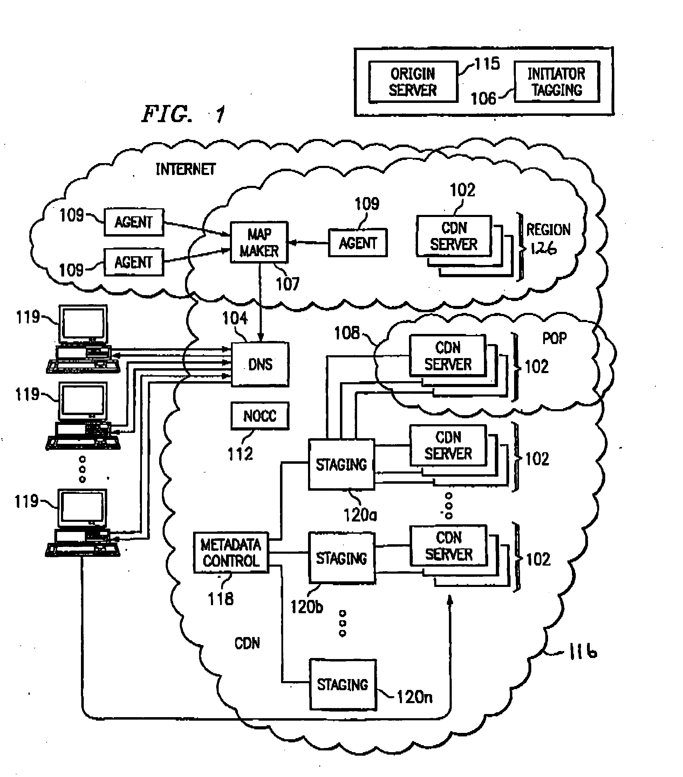

As seen in Figure 1, an Internet content delivery infrastructure usually comprises a set of "surrogate" origin servers 102 that are located at strategic locations (e.g., Internet network access points, and the like) for delivering copies of content to requesting end users 119. A surrogate origin server **is** defined, for example, in IETF Internet Draft titled "Requirements for Surrogates in the HTTP" dated August 9, 2000. The request-routing mechanism 104 allocates servers 102 in the content delivery infrastructure to requesting clients in a way that maximizes quality, maximizes reliability, and/or minimizes latency. The distribution infrastructure consists of on-demand or push-based mechanisms that move content from the origin server to the surrogates. A CDN service provider (CDNSP) may organize sets of surrogate origin servers as a "region". In this type of arrangement, a CDN region 12b typically comprises a set of one or more content servers that share a common backend, e.g., a LAN, and that are located at or near an Internet access point. Thus, for example, a typical CDN region may be co-located within an Internet Service Provider (ISP) Point of Presence (PoP) 108. A representative CDN content server is a Pentium-based caching appliance running an operating system (e.g., Linux, Windows NT, Windows 2000) and having suitable RAM and disk storage for CDN applications and content delivery network content (e.g., HTTP content, streaming media and applications). Such content servers are sometimes referred to as "edge" servers as they are located at or near the so-called outer reach or "edges" of the Internet. The CDN typically also incudes network agents 109 that monitor the network as well as the server loads. These network agents are typically co-located at third party data centers or other locations. Map maker software 107 receives data generated from the network agents and periodically creates maps that dynamically associate IP addresses (e.g., the IP addresses of client-side local name servers) with the CDN regions.

In one service offering, available from Akamai Technologies, Inc. of Cambridge, Massachusetts, content is marked for delivery from the CDN using a content migrator or rewrite tool 106 operated, for example, at a participating content provider server. Tool 106 rewrites embedded object URLs to point to the CDNSP domain. A request for CDN-enabled content is resolved through a CDNSP-managed DNS to identity a "best" region, and then to identify an edge server within the region that is not overloaded and that is likely to host the requested content. An illustrative request routing technique is described in U.S. Patent No. 6,108,703. Instead of using content provider-side migration (e.g., using the tool 106), a participating content provider may simply direct the CDNSP to serve an entire domain (or subdomain) by a DNS directive (e.g., a CNAME). In such case, the CDNSP may provide object-specific metadata to the CDN content servers to determine how the CDN content servers will handle a request for an object being served by the CDN. Metadata, as used herein, thus refers to the set of control options and parameters for an object (e.g., coherence information, origin server identity information, load balancing information, customer code, other control codes, etc.), and such information may be provided to the CDN content servers via a configuration file, in HTTP headers, or in other ways. An object URL that is served from the CDN in this manner need not be modified by the content provider. When a request for the object is made, for example, by having an end user navigate to a site and select the URL, a customer's DNS system directs the name query (for whatever domain is in the URL) to the CDNSP DNS request routing mechanism. Once an edge server is identified, the browser passes the object request to the server, which applies the metadata supplied from a configuration file or HTTP response headers to determine how the object will be handled. As illustrated in Figure 1, the CDNSP may operate a metadata transmission system 116 comprising a set of one or more servers to enable metadata to be provided to the CDNSP content servers. The system 116 may comprise at least one control server 118, and one or more staging servers 120a-n, each of which is typically an HTTP server (e.g., Apache). Metadata is provided to the control server 118 by the CDNSP or the content provider (e.g., using a secure extranet application) and periodically delivered to the staging servers 120a-n. The staging servers deliver the metadata to the CDN content servers as necessary.

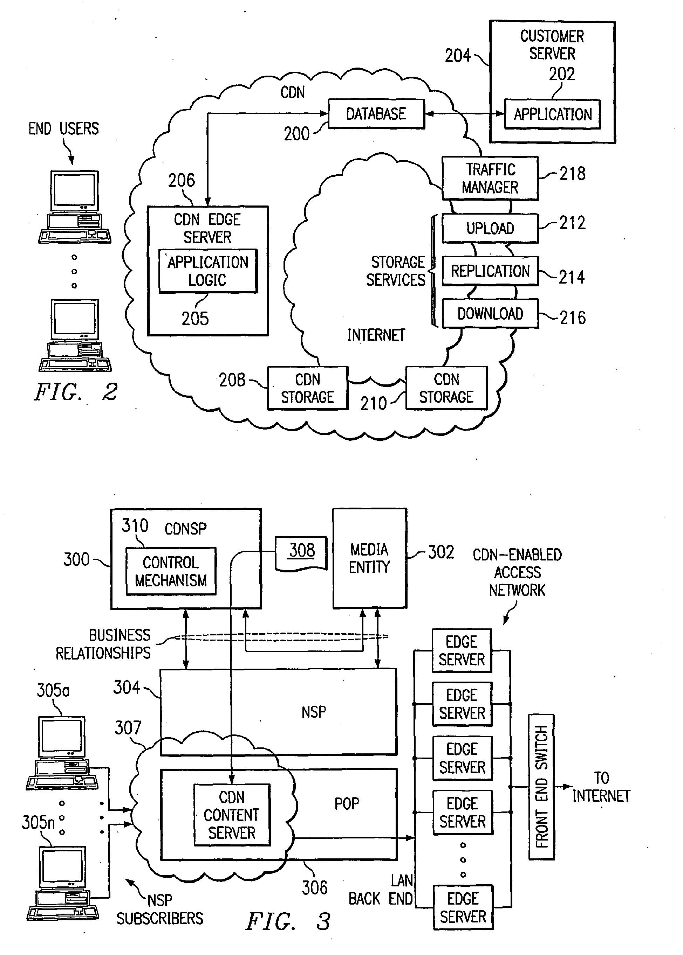

The CDNSP may provide additional services to customers. As illustrated in Figure 2, for example, the CDNSP may include a knowledge base 200 of where and how users access the Internet. This database can be used by the CDNSP to provide an information access and retrieval method, system and/or managed service for accurately identifying, among other access attributes, the geographic location from which users access a Web site and the network origin of a user's request. Such "geo-location" data is useful in application logic to process requests based on an end user's geographic location (e.g., country, state, city, etc.), network of origin, connection type (e.g., cable, DSL, dial-up, etc.) or browser type. In one implementation, a customer application 202 running on a Web or application server 204 is provided with the capability to query the database 200 and, in response, to receive geo-location data that is then used by the third party application 202 in some manner (e.g., content customization, territorial management of content, or the like). The database 202 may also be queried from third party application logic 204 executing on a CDN edge server 206 using page directives called Edge Side Includes (ESI). The syntax and use of ESI for this purpose is described at www.esi.org. Further details of dynamic content assembly using ESI are described in commonly-owned, copending application PCT US01/25966 filed August 20, 2001, titled "Dynamic Content Assembly On Edge-Of-Network Servers,".

In addition to the caches in the edge servers, preferably the CDNSP also provides persistent content storage via a distributed storage system. As also illustrated in Figure 2, the distributed storage system may be implemented over two or more storage locutions 208 and 210 preferably using a set of distinct services: upload 212, replication 214 and download 216. Content providers upload their content, preferably using conventional client software (e.g., a file transfer protocol (FTP) client) to a given one of the storage locations that is optimal for the upload as determined by a traffic manager system or managed service 218. Once content is stored at a particular site, the content preferably is replicated to the other storage site(s). Thus, a particular content provider need only upload its content to one optimal site, and the system then replicates the uploaded content to the other storage site(s). When content is requested, e.g., by an edge server operating in a content delivery network (CDN), it is retrieved from a storage site that is optimal for the download. Further details of such a distributed storage technique are described in commonly-owned, copending application Serial No. 10/113,183, filed April 1, 2002, titled "Scalable, High Performance and Highly Available Distributed Storage System For Internet Content,". Further details of an illustrative traffic manager system or managed service are described in commonly-owned, copending application Serial No. 09/866,897, filed May 29, 2001, titled "Global Load Balancing Across Mirrored Data Centers,". Other commercial available products that may be used for the traffic manager include Cisco Global Director, global load balancers from F₅, and the like.

A CDNSP may enter into business relationship with an Internet Service Provider (ISP), who agrees to allow the CDNSP to co-locate the CDNSP's content servers in its facilities. For purposes of illustration only, this is sometimes referred to herein as a CDN-enabled access network. In a representative embodiment, a CDN-enabled access network is a set of intel processor-besed, preferably carrier-class, rack-mountable servers typically connected to a front-end Ethernet switch that provides a connection to the Internet, and a back-end Ethernet switch that provide inter-server communications. A typical server has an operating system (Linux-based, Windows-based, or the like) and a set of applications, such as a tcp/ip connection manager, a cache, a log routine, and other control routines that facilitate the content delivery techniques implemented by the CDNSP at the server. A CDNSP "region" thus may be located within a given ISP facility. The CDNSP request routing mechanism routes ISP subscriber requests to that region for optimal performance and reliability, and to reduce the amount of backhaul traffic over high cost Internet links between content provider origin servers and the ISP. In an illustrative embodiment, the CDNSP provides access networks with CDN edge servers free or substantially free of charge to deploy into their networks. These deployments allow the CDNSP to place servers at the modem heads-as close to the end-users as technically possible. These networks need only install the servers and provide them with power and an IP address, and the CDNSP typically is responsible for the management, operation, and replacement of the servers over time. The benefits to the ISP in this relationship are significant. One of an ISP's primary expenses is the bandwidth connecting it to the Internet. Upstream transit networks provide that bandwidth. By bringing CDN edge servers-and thus the content of its participant content properties-into the ISP's network, the ISP significantly reduces the amount of traffic that it must pull into its network and thus the cost of doing so. In addition, the ISP is able to offer its customers improved performance and reliability inasmuch as the content of these sites is now located significantly closer to the ISP's end-users.

The illustrative CDN in Figures 1-2 and as described above is not meant to be taken to limit the present invention in any way but, rather, merely to illustrate a preferred environment for implementation of the present invention, which is now described.

Referring now to Figure 3, the present invention is a business method that involves several entities, a CDNSP 300, a media entity 302, and at least one network service provider (NSP) 304. Typically, NSP 304 is an Internet Service Provider operating a network facility such as an Internet Point of Presence 306. CDNSP 300 operates a content delivery network such as described generally above. Media entity 302 creates or otherwise sources content that will be served, in whole or in part, over the CDN. CDNSP and NSP have a relationship under which a CDN-enabled access network 307 has been associated with (e.g., co-located or nearby) a given NSP facility (e.g., PoP 306) to which end users 305a-n obtain Internet access connectivity.

According to the invention, the CDNSP 300 and media entity 302 enter into a relationship, agreement or other understanding. Under this arrangement, media entity 302 creates (or otherwise obtains from a suitable source) given content, which for simplicity is represented in Figure 3 by a single digital file 308. Digital file 308 is a data string generated in any convenient manner from given content, e.g., text, audio, visual, movie, film, graphic, photo, executable, some combination, or the like. Digital file 308 is capable of being served in whole or in part over the CDN.

A feature of the present invention is that digital file 308 is exclusively assoicated with a given CDN-enabled access network 307 to which end users 305a-n obtain Internet access connectivity. As will be seen, the CDNSP filters requests for the digital file in such a manner as to ensure that only end users 305a-n can obtain access to the digital file.

Under the arrangement between CDNSP 300 and media entity 302, media entity preferably undertakes significant advertising and promotion activities (e.g., to the general public or some targeted subset thereof) to identify the content, and these activities specifically direct potential viewers of that content to at least one NSP that is enabled (or "powered by") by the CDNSP. The goal of the advertising and promotional activities, which may be of any type (e.g., television, radio, print, online, etc., or some combination thereof), is to create significant relevant consumer demand for that content. The CDNSP and media entity relationship, however, preferably requires (among other things) that the content be served only from those NSPs that are provisioned with CDNSP content servers, or, perhaps, from NSPs that have peering relationships therewith. As noted above, a CDN-enabled access network is co-located in or near the NSP facility. The CDNSP-NSP arrangement may be separate from the CDNSP/media entity relationship, or it may be integrated therewith. The CDNSP may provide the CDN-enabled access network at its cost or, in the alternative, the NSP undertakes to pay all or some portion of the capital expenditures for the purchase, deployment, installation and maintenance of those CDN content servers in exchange (among other things) for having preferred (if not exclusive) access to the content 308 (which, preferably, will not be available from NSPs that do not have such arrangements with the CDNSP). Thus, preferably only end user customers/subscribers of NSPs that have such an arrangement with the CDNSP (and, directly or indirectly, with the media entity 302) get access to the content 308 (or at least preferential access thereto).

CDNSP uses control mechanism 310 to ensure that the content 308 is only served from an NSP having the relationship with the CDNSP (directly) and the media entity (directly or indirectly). Control mechanism 310 may be any suitable system, computer, program or process, or combination thereof, or service, that the CDNSP or the media entity may use to ensure that the digital file is served preferentially from the NSP "powered by" the CDNSP. There are many ways that the CDNSP can use to accomplish this. In one approach, the control mechanism may reside on the media entity web or application server. In this example, the web or application server executes an application that responds to a user request, accesses the CDNSP knowledge base (such as database 200 in Figure 2), and provides a response identifying the end user's origin networ or other metric. The application then checks to see whether the origin network is a CDN-enabled access network. A list of such networks is periodically compiled by the CDNSP and disseminated as needed. If the origin network of the requesting end user is a CDN-enabled access network, the end user is authorized to obtain the given content. (Of course, there may be different degrees of authorization imposed, e.g., providing a given version of the content to one who connects over DSL, as compared to a dial-up connection). If the origin network as identified by the data retrieved from the knowledge base is not a CDN-enabled access network, the application preferably returns a web page indicating that access is denied. This page may also provide a list of CDN-enabled access networks from which the content can be obtained. Alternatively, where the CDN is providing delivery of the media company's entire site, the application logic (for querying the knowledge base, checking whether an origin network is a CDN-enabled access network, and for authorizing or denying access) preferably operates on an CDN edge server. ESI tags may be used to incorporate this logic into a given web page.

Other control mechanisms are possible. Thus, e.g., the content may be tagged or migrated to the CDN with a specific domain name that the CDN request routing mechanism may then recognize and use to direct the content to the NSP "region" in the CDN. In such case, the NSP is defined as a standalone "region" within the CDN, perhaps with its own namespace, and CDN request routing ensures that only end users accessing the content from that region can obtain and view it. Alternatively, CDNSP may use a global traffic management service to direct end users to the NSps having CDN content servers that are provisioned to cache and serve the content. The control mechanism may also control routing to a specific IP address block (known to be connected to the NSP) or to a specific IP address of an end user client machine. The CDNSP/NSP arrangement may provide that the NSP gets a certain amount of credit/subscriber that it may then apportion as the NSP sees fit. There may be restrictions on a server to which an end user has been mapped to ensure that only participating end users can obtain given content. Generalizing, the determination of whether a given end user is afforded access may be based on looking at network data (e.g., CIDR blocks), NSP-supplied data, or any other tools used by the CDNSP.

In one embodiment, the invention is a multiple party arrangement with CDN content server build-out financed in whole or by part by the NSP with the CDNSP ensuring that NSP end user customers/subscribers preferentially (or exclusively) view the compelling content created by the media entity.

Thus, according to the invention, a given media entity creates or obtains a unique content package for an NSP that operates a given CDN edge server region. The media entity controls the offering and may have a relationship with the NSP. The CDNSP provides the CDN edge server region and its distributed platform for delivery of the content. Preferably, the content is tagged for delivery over the CDNSP by the media entity directing (e.g., using a DNS CNAME directive) name queries for a domain associated with a file URL to the CDNSP. Using ESI and content targeting through the knowledge base, the CDNSP detects NSP-connected end users and providers the content to them to the exclusion of non NSP-connected end users.

Generalizing, the media entity operates a Web site with content (Web content, streaming media or an application) it desires to target to given end users. The media entity employs the CDNSP to deliver the content. Preferably, the content is identifiable at the site by a URL having a domain that is tagged (e.g., via a CNAME) to be resolved by the CDNSP request routing mechanism. (In the case that the end user device is not one that directly references URLs (e.g., a television connecting to a cable network), there may be a translation from a request identifier to a URL that is performed somewhere within the NSP's network). The media entity may store the content in a persistent storage system operated by the CDNSP, although this is not required. The media entity has advertised and promoted a given network and/or its network service provider (NSP) as having the content. An end user that uses the NSP as his or her access network is a participating end user; an end user that does not use the NSP as his or her access network is a non-participating end user. When an end user requests the content (e.g., by selecting a link having a domain tagged to point to the CDN), the CDNSP identifies a given edge server to serve the content. If that server does not have the content, it gets the content from the distributed storage system operated by the CDNSP or, failing that, from an origin server.

For content served non-participating end users, preferably the media entity is billed for such delivery by the CDNSP (e.g., based on Mbytes/second delivered). For content delivered for an "exclusive" service for participating end users, the media entity preferably is billed for the content delivery in a different fashion (e.g., per subscriber or per user transaction/download); alternatively, the media entity is not billed for the delivery at all. Exclusive denotes any content, offerings or promotions that are available only to end users on CDN-enabled access networks. "Standard" is defined as content delivered to end users not on a CDN-enabled access network, as determined by the CDNSP knowledge base. Preferably, the media entity establishes the criteria by which a user is a participating end user, i.e., eligible for delivery from the edge region. As noted above, preferably the CDNSP provides the answer, in real-time, upon request by accessing the database.

The media company preferably develops unique offerings for a specific demographic - such as broadband homes or at university students - depending on the type of CDN-enabled access network. These offerings could be for specific media company content (i.e., a music video service) or for a uniquely branded offering that aggregates content from multiple media company, or even third party, content properties. Preferably, the media company has complete control over the content bundle as well as the revenue model. The CDNSP, through its CDN-enabled edge access networks, provides the media company with a near-fixed cost distribution platform. Using targeting information (i.e., the knowledge base) the CDN and/or the media company have the ability to limit access to the content bundle to the targeted demographic. This enables the media company to ensure an economically sound cost structure and ultimately a profitable revenue stream.

Given a relatively widespread deployment of CDN-enabled access networks and the unique cost structure provided to the CDNSP in these CDN-enabled networks, the content providers who had access to the inventive media distribution platform have an enormous opportunity to develop reasonable and scalable business models based on the fixed cost of distribution. This invention thus enables the Internet to become a practical distribution channel for media.

As noted above, an important advantage is provided by associating a given content offering exclusively with a set of one or more CDN-enabled access networks. While the goal of this is to ensure rapid growth of the platform, exclusivity means that end users who access the Internet through non-CDN-enabled access networks will not be able to obtain the content. For example, when clicking on a link to enter the web site containing the exclusive content, a user connected to a non-CDN-enabled access network would instead see a page informing her that her ISP is not in the CDN and perhaps telling her which ISPs in her area are part of the CDN. This in turn spurs the further growth of the distributed platform, allowing the media company to reach an increasingly large audience in a manner that is economically viable-with the goal of eventually building the platform out to cover a significant percentage of the Internet's global reach.

Online music and video are clearly examples of compelling content that users would find compelling. Likewise, games, whether software downloads or other associated files, would be compelling enough to be included in the bundle. Of course, given its core competency, the media company preferably determines what content should be made available in the manner described herein, with the goal of bundling content that will be sufficiently compelling to make users demand access to this content from their ISPs or switch ISPs. Preferably, the media company should also determine the revenue model by which the content would be offered to end-users-for example, subscription, advertising based, pay-per-view, or a mixture of these or other models.

An important step in the success distribution model is a marketing campaign for the offering. The goal of the campaign is twofold. First, the campaign must generate enough users to enable the distribution to generate sufficient revenue and profits for the media company. Second, the campaign must generate enough interest and demand that users may even require their ISP to become a CDN-enabled access network if it is not already one.

Preferably, the CDNSP provides the media company with an application having a custom interface to the CDN that enables the management of content on the network. Using this application, the media company can publish new content to the network on a regular basis and to generate specific detailed reports on usage. The CDNSP preferably is responsible for all aspects of maintenance, operation, and ensuring the day-to-day reliability and performance of the network.

Thus, according to the invention, the media company produces a compelling bundle of content available only on a CDN-enabled access network. Preferably, the media company retains the rights to all content and owns the relationship with end-users. The media company commits to and implements a marketing plan that will ensure the popularity and success of the offering. The CDNSP provides the CDN and, in particular, the CDN-enabled access network. An ISP may fund the expense of provisioning the CDN-enabled access network. The CDNSP extends the CDN into additional CDN-enabled access networks as needed based on the demand for the compelling offering. The CDNSP acquires and operates hardware associated with the platform and preferably is responsible for the relationship with the ISPs. The CDNSP charges other media companies that wish to use the platform based on pre-defined metrics, such as footprint size. As a partner in the creation of the platform, the media company may obtain most-favored pricing on the platform and potentially a share of revenue from other media companies that use the platform.

The present invention provides significant advantages. It enables both the CDNSP and the media company to build an effective platform for IP distribution of media. Due to the economic and technical challenges of the Internet, distribution for such a platform preferably takes place within ISPs, which are provisioned with CDN-enabled access networks. With end-users spread over 7,000 networks today (and with that number growing), leveraging the CDN's distributed platform provides the media company with economies of scale and an reliable distribution mechanism. This is especially true when the NSPs are able to provision their network with CDNSP nodes and allow the CDNSP to consume bandwidth in serving the NSP. This enables the media company to avoid capital-intensive strategies, such as acquiring a broadband network. The media company's major investment, developing or acquiring the content, packaging and marketing, are its core competencies. By building its media distribution platform in this way, the media company positions itself with both the IP networks of the world and the various other media companies that will be interested in using this platform. This strategy gives the media company a way of not becoming beholden to the large RBOCs or MSOs, and provides important leverage to use in dealing with other media companies. In addition, the risk to making content exclusive to a given CDN-enabled access network is low. Thus, while delivering the content exclusively on the CDN does restrict some distribution options, it likely does not restrict any viable business options.

The use of CDN-enabled access networks for a distributed media platform is highly advantageous to the media company as it reduces fixed distribution costs. Unlike traditional media distribution, with a CDN-enabled access network, there are no additional networks to peer with, there are no bandwidth providers to contract, and there are no significant sets of equipment to travel through. Bandwidth cannot be free on the general Internet, because thousands of devices are required to move data across the various networks. The strategy of the CDN-enabled access network is to skip all of this expensive hardware, delivering content directly to end-users from within their local ISP network where bandwidth can be free. The other key benefit of the CDN-enabled access network is it allows a media company to not be hindered by the inherent bandwidth limits of the Internet. Intelligently moving the content to the edge when it is published-using load balancing and intelligent distribution techniques to avoid bandwidth limitations-the CDN leverages the massive amounts of bandwidth available to end-users from within their access networks. Using the CDN-enabled access network, content does not need to travel through the core of the Internet and therefore is not limited by any of the Internet's inherent performance bottlenecks. Variants

There are many variations of the above-described invention. As used herein, "exclusive" content should be broadly construed also to cover a given piece of content, or perhaps a content bundle (a set of content elements) that is available for a given discount (e.g., 50% off the standard pricing) where the bundle is enabled by the CDNSP-NSP relationship. Moreover, the benefits afforded to participating end users need not be merely that the content is "free" to them, as more complex arrangements are within the scope of the invention. Thus, the NSP business model may simply provide such enabled users with a given discount on the content (e.g., 50% off), or provide some other benefit such as a different, more favorable billing model, more flexibility (e.g., 30 downloads per month vs. 20), or the like. For non-participating end users that request the content (and are blocked, as described above), it may be desirable to provide such users with other content as opposed to an "access denied" type of message.

In addition, it may be desirable to set up access rights to the content to end users who pay an additional service fee (e.g., on a monthly basis) to the NSP. In this case, the content is only served to the requesting end user who is authorized to receive it (i.e., a monthly subscriber) and who obtains Internet access from the access network.

There may also be different classes of access networks that are enabled by the CDNSP, and those networks may differ on a per-CDNSP-customer basis or by the type of media delivery they enable. Thus, a first access network may provide only streaming (a CDN-enabled access network for streaming), a second network may provide web content (a CDN-enabled access network for http), a third access network may provide only Windows-based streaming (a CDN-enabled access network for Windows streaming), and so on.

Some media companies may provide content to a given access network exclusively irrespective of the advertising commitment described above with respect to the illustrative embodiment. In an alternate embodiment of this type, the CDNSP provides the access network with its edge servers as described above, and the NSP might agree, e.g., to a revenue share with the CDNSP for new end user subscribers, to refer content provider customers to the CDNSP, to resell the CDNSP's services, or the like. Within these networks, the CDNSP may offer the same content at a lower price, offer the same content and some exclusive content, offer a different usage model for the same content, or even offer a "better" version of the same content.

In certain scenarios, it may be desirable for a media entity to create or obtain given content and to make that content available from CDN-enabled access networks and non-CDN-enabled access networks but where the terms governing usage of the content by the end user is different. Thus, in the former case the end user gets a reduced monthly subscription fee.

In an given embodiment, an NSP that is enabled (i.e., be entering into relationships with the CDNSP to provision a CDN-enabled access network) acts as an intermediary between the content provider and the end users and/or the CDNSP and the end users to manage or resell the content offering (e.g., handle user registration, billing, etc.). In such case, the NSP may obtain a share of the revenue or profits for undertaking these obligations.

In another scenario, end users who have access to the content in their NSP are provided full or limited access to the content even when they are connected to the Internet via a different NSP, which may or may not be a CDN-enabled access network.

In yet another scenario, content available to all end users is modified based on the availability of the exclusive content so as to reflect the access or lack thereof to this content.

The method by which the content provider determine which networks are or are not enabled and in turn which users are or are not eligible for content can employ a variety of content modification tools. These tools may be incorporated into the site with or without the use of ESI.

In some scenarios, the content may be provided to a user through a different end-device such as a television or a wireless device. In such a scenario, the CDN servers would either understand the request for the named piece of content in the native protocol of the network or sit on an other side of a system that translates that request. This translation may happen at a variety of protocol levels including, without limitation, to the transport, network, and application layer protocols.

As described generally above, there are many different ways in which the CDNSP may charge the content provider for the services described herein. Thus, for example, charges may be on a per subscriber basis, on a per file basis, on a per Gbyte of footprint, on a per Mbyte delivered, some combination of the above, or the like. There is no particular requirement in this regard.

According to another variant, the enabling of the NSP according to the invention may be effected simply through a CDN peering arrangement as opposed to a distinct CDN-enabled access network.

There is no requirement that the media entity (namely, the content provider) be an entity distinct from the CDNSP, although that will be the usual situation. The content provider and the CDNSP may be the same entity.

Having described our invention, what we claim is as follows.

## Claims

1. A method of content delivery in a content delivery network (CDN), the CDN deployed, operated and managed by a content delivery network service provider (CDNSP) (300) on behalf of participating content providers (302), the CDN comprising a set of content servers and a domain name system (DNS) associated with a CDN namespace, the method comprising:
provisioning a subset (306) of the set of content servers in association with an internet access network by which first internet users (305) obtain internet access;
associating given content of one of the participating content providers (302) with the subset (306) of content servers to provide a content delivery network (CDN)-enabled access network (307);
responsive to receipt at the domain name system (DNS) associated with the CDN namespace of a DNS query, the DNS query including a CDN name that is associated with the given content, determining whether the DNS query is associated with a given one of the first internet end users using the internet access network;
if the DNS query is associated with a given one of the first internet end users using the internet access network, attempting delivery of the given content from a given one of the subset of content servers provisioned in the CDN-enabled access network; and
if the DNS query is not associated with a given one of the first internet end users using the internet access network, inhibiting delivery of the given content from the subset of the set of content servers provisioned in the CDN-enabled access network.

2. The method as described in Claim 1 wherein the CDN-enabled access network is located within the internet access network.

3. The method as described in Claim 1 wherein the CDN-enabled access network is in a network that has a peering relationship with the internet access network.

4. The method as described in Claim 1 wherein upon delivery of the given content from given one of the subset of the set of content servers provisioned in the CDN-enabled access network, providing a given benefit to a participating content provider.

5. The method as described in Claim 4 wherein the given benefit is delivery of the given content without incurring a content delivery charge from the CDNSP.

6. The method as described in Claim 1 wherein delivery of the given content is restricted exclusively to the CDN-enabled access network.

7. The method as described in Claim 1 wherein given advertising is associated with the given content and the CDN-enabled access network.

8. The method as described in Claim 1 further including storing the given content in a data store of the CDN.

9. The method as described in Claim 1 wherein the first internet end users are users that pay a given subscription fee to obtain access to the given content over the CDN-enabled access network.

10. The method as described in Claim 1 wherein the CDN-enabled access network is associated with a given content type.

## Patentansprüche

1. Verfahren zur Inhaltsübergabe in einem Inhaltsübergabenetzwerk (CDN), wobei das CDN durch einen Netzwerkserviceprovider für Inhaltsübergabe (CDNSP) (300) für einen teilnehmenden Inhaltsprovider (302) eingesetzt, betrieben und verwaltet wird, wobei das CDN eine Menge von Inhaltsservern und ein Domainnamenssystem (DNS) aufweist, das mit einem CDN-Namensraum assoziiert ist, wobei das Verfahren Folgendes umfasst:
Bereitstellung einer Teilmenge (306) der Menge von Inhaltsservern in Verbindung mit einem Internet-Zugangsnetzwerk, durch das Internet-Benutzer (305) einen Internet-Zugang erhalten,
Zuordnen eines bestimmten Inhalts eines der teilnehmenden Inhaltsprovider (302) in der Teilmenge (306) der Menge von Inhaltsservern, um ein Zugangsnetzwerk (307) eines Inhaltsübergabenetzwerks (CDN) bereitzustellen,
Bestimmen in Abhängigkeit vom Empfang am Domainnamensystem (DNS), das mit dem CDN-Namensraum einer DNS-Anfrage assoziiert ist, wobei die DNS-Anfrage einen CDN-Namen umfasst, der mit einem bestimmten Inhalt assoziiert ist, ob die DNS-Anfrage mit einem bestimmten der ersten Internet-Endbenutzer assoziiert ist, die das Internet-Zugangsnetzwerk benutzen,
Versuch einer Abgabe des bestimmten Inhalts von einer bestimmten Teilmenge der Internetserver, die in dem CDN-Freigabezugangsnetzwerk bereitgestellt sind, wenn die DNS-Anfrage mit einem bestimmten der ersten Internet-Endbenutzer assoziiert ist, die das Internet-Netzwerk benutzen, und
Verhindern der Abgabe des bestimmten Inhalts von der Teilmenge der Menge von Inhaltsservern, die in dem CDN-Freigabezugangsnetzwerk bereitgestellt sind, wenn die DNS-Frage nicht einem bestimmten ersten Internet-Endbenutzer, der das Internet-Zugangsnetzwerk benutzt, zugeordnet ist.

2. Verfahren nach Anspruch 1, bei dem das CDN-Freigabezugangsnetzwerk innerhalb des Internet-Zugangsnetzwerks lokalisiert ist.

3. Verfahren nach Anspruch 1, bei dem das CDN-Freigabezugangsnetzwerk ein Netzwerk ist, das in einer Peering-Beziehung mit dem Internet-Zugangsnetzwerk steht.

4. Verfahren nach Anspruch 1, bei dem nach Abgabe des bestimmten Inhalts von einer bestimmten Teilmenge der Menge von Inhaltsservern, welche in dem CDN-Freigabezugangsnetzwerk vorgesehen sind, ein bestimmter Vorteil an einen teilnehmenden Inhaltsprovider ausgegeben wird.

5. Verfahren nach Anspruch 4, bei dem der bestimmte Vorteil die Abgabe des bestimmten Inhalts ohne Berechnung einer Inhaltsabgabegebühr von dem CDNSP ist.

6. Verfahren nach Anspruch 1, bei dem die Abgabe des bestimmten Inhalts exklusiv auf das CDN-Freigabezugangsnetzwerk begrenzt ist.

7. Verfahren nach Anspruch 1, bei dem bestimmte Werbung mit dem bestimmtem Inhalt und dem CDN-Freigabezugangsnetzwerk assoziiert ist.

8. Verfahren nach Anspruch 1, welches ferner die Speicherung des bestimmten Inhalts in einem Datenspeicher des CDN beinhaltet.

9. Verfahren nach Anspruch 1, bei dem die ersten Internet-Endbenutzer Nutzer sind, die eine bestimmte Benutzungsgebühr bezahlen, um Zugang zu einem bestimmten Inhalt über das CDN-Freigabezugangsnetzwerk zu erhalten.

10. Verfahren nach Anspruch 1, bei dem das CDN-Freigabezugangsnetzwerk mit einem bestimmten Inhaltstyp assoziiert ist.

## Revendications

1. Procédé de remise de contenus dans un réseau de remise de contenus (CDN), le CDN étant déployé, actionné et géré par un fournisseur de services de réseau de remise de contenus (CDNSP) (300) au nom de fournisseurs de contenus participants (302), le CDN comprenant un ensemble de serveurs de contenus et un système d'adressage par domaines (DNS) associé à un espace de noms de CDN, le procédé comprenant les étapes consistant à :
approvisionner un sous-ensemble (306) de l'ensemble de serveurs de contenus en association avec un réseau d'accès à Internet grâce auquel des premiers utilisateurs d'Internet (305) obtiennent un accès à Internet ;
associer un contenu donné de l'un des fournisseurs de contenus participants (302) au sous-ensemble (306) de serveurs de contenus de façon à fournir un réseau d'accès (307) compatible avec un réseau de remise de contenus (CDN) ;
en réponse à la réception au niveau du système d'adressage par domaines (DNS) associé à l'espace de noms de CDN d'une requête de DNS, la requête de DNS comprenant un nom de CDN qui est associé au contenu donné, déterminer si la requête de DNS est associée à l'un donné des premiers utilisateurs finaux d'Internet utilisant le réseau d'accès à Internet ;
si la requête de DNS est associée à l'un donné des premiers utilisateurs finaux d'Internet utilisant le réseau d'accès à Internet, essayer de remettre le contenu donné à partir de l'un donné du sous-ensemble de serveurs de contenus approvisionnés dans le réseau d'accès compatible CDN ; et
si la requête de DNS n'est pas associée à l'un donné des premiers utilisateurs finaux d'Internet utilisant le réseau d'accès à Internet, empêcher de remettre le contenu donné à partir du sous-ensemble de l'ensemble de serveurs de contenus approvisionnés dans le réseau d'accès compatible CDN.

2. Procédé selon la revendication 1, dans lequel le réseau d'accès compatible CDN se situe à l'intérieur du réseau d'accès à Internet.

3. Procédé selon la revendication 1, dans lequel le réseau d'accès compatible CDN se situe dans un réseau qui présente une relation d'appairage avec le réseau d'accès à Internet.

4. Procédé selon la revendication 1, dans lequel lors de la remise du contenu donné à partir de l'un donné du sous-ensemble de l'ensemble de serveurs de contenus approvisionnés dans le réseau d'accès compatible CDN, fournir un avantage donné à un fournisseur de contenus participant.

5. Procédé selon la revendication 4, dans lequel l'avantage donné est la remise du contenu donné sans occasionner de frais de remise de contenus de la part du CDNSP.

6. Procédé selon la revendication 1, dans lequel la remise du contenu donné est limitée de manière exclusive au réseau d'accès compatible CDN.

7. Procédé selon la revendication 1, dans lequel une publicité donnée est associée au contenu donné et au réseau d'accès compatible CDN.

8. Procédé selon la revendication 1, comprenant en outre un stockage du contenu donné dans un magasin de données du CDN.

9. Procédé selon la revendication 1, dans lequel les premiers utilisateurs finaux d'Internet sont des utilisateurs qui paient des frais d'abonnement donnés de façon à obtenir un accès au contenu donné sur le réseau d'accès compatible CDN.

10. Procédé selon la revendication 1, dans lequel le réseau d'accès compatible CDN est associé à un type de contenu donné.
